# EUROPÄISCHE PATENTSCHRIFT

(11) **EP 3 560 311 B1**
(45) Veröffentlichungstag und Bekanntmachung des Hinweises auf die Patenterteilung: **13.10.2021**
(21) Anmeldenummer: 19169172.4
(22) Anmeldetag: 15.04.2019
(51) Int. Cl.: A01B 59/043, A01B 59/06

(54) **DREIPUNKT-KRAFTHEBER FÜR EINEN LANDWIRTSCHAFTLICHEN TRAKTOR**
THREE POINT POWER LIFT FOR AN AGRICULTURAL TRACTOR
RELEVAGE TROIS POINTS POUR UN TRACTEUR AGRICOLE

(30) Priorität: 27.04.2018 DE 102018206628
(43) Veröffentlichungstag der Anmeldung: 30.10.2019
(73) Patentinhaber: Deere & Company, Moline, IL 61265 (US)
(72) Erfinder: Schibel, Achim, 68163 Mannheim (DE); Zahn, Werner, 68163 Mannheim (DE)
(74) Vertreter: Dehnhardt, Florian Christopher

(56) Entgegenhaltungen:
- EP-A1- 2 556 736
- EP-A1- 2 671 440
- CN-A- 104 135 844
- GB-A- 1 134 356

## Beschreibung

Die Erfindung bezieht sich auf einen Dreipunkt-Kraftheber für einen landwirtschaftlichen Traktor, mit einem Hubarm, einem Unterlenker und einer dazwischen angeordneten Hubspindel zur Übertragung einer an dem Hubarm ausgeführten Schwenkbewegung auf den Unterlenker, wobei die Hubspindel einen an dem Hubarm angelenkten ersten Befestigungsabschnitt und einen an dem Unterlenker angelenkten zweiten Befestigungsabschnitt aufweist, wobei in dem zweiten Befestigungsabschnitt ein in Längsrichtung der Hubspindel verlaufendes Langloch ausgebildet ist, in dem ein sich durch eine Befestigungsöffnung des Unterlenkers erstreckender Montagebolzen gelagert ist.

Ein derartiger Dreipunkt-Kraftheber im Heckbereich eines landwirtschaftlichen Traktors umfasst üblicherweise ein hydraulisch betätigbares Hubwerk mit linken und rechten Hubarmen, die sich mittels zugehöriger Hydraulikzylinder verschwenken lassen, sowie linke und rechte Unterlenker, die in unteren Anlenkpunkten des Dreipunkt-Krafthebers schwenkbar gelagert und über längenverstellbare Hubspindeln mit den Hubarmen bewegungsverbunden sind. Des Weiteren ist ein zentraler Oberlenker vorhanden, der an einer oberen Anlenkstelle des Dreipunkt-Krafthebers schwenkbar aufgehängt ist. Sowohl die Unterlenker wie auch der Oberlenker weisen Kupplungshaken zur Aufnahme komplementärer Befestigungselemente eines an dem Dreipunkt-Kraftheber anzubringenden Anbaugeräts auf. Jeder der Unterlenker ist mittels eines abnehmbaren Montagebolzens in einem Langloch einer jeweiligen Hubspindel befestigt, wobei das Langloch die Bereitstellung eines vertikalen Bewegungsfreiheitsgrads, mithin die Verwirklichung einer Schwimmstellung erlaubt. Dies ist bei Betrieb bestimmter bodeneingreifender Anbaugeräte zum Ausgleich von beim Bearbeiten eines Felds auftretenden Bodenunebenheiten erforderlich. Daneben ist es möglich, den Unterlenker innerhalb des Langlochs in einer unteren Stellung mittels des Montagebolzens festzulegen.

Zwischen den beiden Unterlenkern befindet sich ferner ein Zugmaul oder eine vergleichbare Kupplungseinrichtung zur Anbringung einer Anhängedeichsel gezogener Zusatzgeräte, also beispielsweise eines Anhängers, Heuladewagens oder dergleichen. Bei der Durchführung von Transportfahrten ist zur Verringerung des Wenderadius beim Rangieren ein möglichst großer Seitenfreiraum zwischen der Anhängedeichsel und den Unterlenkern erwünscht. Die Unterlenker werden in einem solchen Falle mittels des hydraulischen Hubwerks in eine möglichst weit angehobene Stellung verbracht. Die Dokumente EP 2 671 440 A1, EP 2 556 736 A1, GB 1 134 356 A und CN 104 135 844 A beschreiben bekannte Dreipunkt-Kraftheber.

Es ist Aufgabe der vorliegenden Erfindung, einen Dreipunkt-Kraftheber der eingangs genannten Art anzugeben, der eine zusätzliche Vergrößerung des Seitenfreiraums einer zwischen den Unterlenkern verlaufenden Anhängedeichsel zulässt.

Diese Aufgabe wird durch einen Dreipunkt-Kraftheber mit den Merkmalen des Patentanspruchs 1 gelöst.

Der Dreipunkt-Kraftheber für einen landwirtschaftlichen Traktor umfasst einen Hubarm, einen Unterlenker und eine dazwischen angeordnete Hubspindel zur Übertragung einer an dem Hubarm ausgeführten Schwenkbewegung auf den Unterlenker. Die Hubspindel weist einen an dem Hubarm angelenkten ersten Befestigungsabschnitt und einen an dem Unterlenker angelenkten zweiten Befestigungsabschnitt auf, wobei in dem zweiten Befestigungsabschnitt ein in Längsrichtung der Hubspindel verlaufendes Langloch ausgebildet ist, in dem ein sich durch eine Befestigungsöffnung des Unterlenkers erstreckender Montagebolzen gelagert ist. Hierbei sind entlang des Langlochs zumindest zwei voneinander beabstandete Arretierungsbereiche zur formschlüssigen Aufnahme eines an dem Montagebolzen vorgesehenen Formmerkmals ausgebildet, wobei eine Bewegung des Unterlenkers entlang des Langlochs jeweils für den Fall blockiert ist, dass der Montagebolzen mittels des Formmerkmals von einem der Arretierungsbereiche aufgenommen ist.

Die in eingebautem Zustand der Hubspindel übereinander liegenden Arretierungsbereiche erlauben es, den Unterlenker sowohl in einer unteren Stellung bzw. einer Betriebsstellung wie auch einer oberen Stellung bzw. einer Transportstellung mittels des Montagebolzens festzulegen. Idealerweise sind die beiden Arretierungsbereiche den gegenüberliegenden Enden des Langlochs zugeordnet, sodass der Unterlenker für den Fall, dass dieser mittels des Montagebolzens in der oberen Stellung festgelegt ist, mittels des hydraulischen Hubwerks der Länge des Langlochs entsprechend weiter nach oben angehoben werden kann. Dies führt zu einer zusätzlichen Vergrößerung des Seitenfreiraums der Unterlenker gegenüber einer zwischen diesen verlaufenden Anhängedeichsel.

Vorteilhafte Weiterbildungen des erfindungsgemäßen Dreipunkt-Krafthebers gehen aus den Unteransprüchen hervor.

Vorzugsweise ist das Formmerkmal durch Umstecken des Montagebolzens in eine die Unterlenker entlang des Langlochs freigebende Schwimmstellung verbringbar. Diese erlaubt es, dass ein an dem Dreipunkt-Kraftheber angebrachtes bodeneingreifendes Anbaugerät, beispielsweise eine Egge, ein Grubber oder dergleichen, innerhalb der durch das Langloch gesetzten Grenzen einer zu bearbeitenden Bodenkontur folgen kann.

Hierbei besteht die Möglichkeit, dass entlang des Langlochs linke und rechte Wangen verlaufen, wobei das Formmerkmal in der Schwimmstellung zwischen den beiden Wangen geführt ist. Zu diesem Zweck wird das Formmerkmal durch Umstecken des Montagebolzens in die Schwimmstellung außer Eingriff mit dem jeweiligen Arretierungsbereich gebracht, wobei sich das Formmerkmal in der Schwimmstellung frei entlang des durch die beiden Wangen umgrenzten Führungsbereichs hin und her bewegen kann.

Ferner ist es denkbar, dass die Arretierungsbereiche in den beiden Wangen in Gestalt von mit einer Außenkontur des Formmerkmals komplementären Ausbrüchen ausgeformt sind. Die in die Ausbrüche der Wangen hineinragende Außenkontur des Formmerkmals blockiert dabei eine Bewegung des Montagebolzens und damit des Unterlenkers entlang des Langlochs.

Im einfachsten Fall handelt es sich bei dem Formmerkmal um eine stirnseitig an dem Montagebolzen angeordnete Vierkantscheibe. Der Montagebolzen einschließlich der Vierkantscheibe besteht typischerweise aus verzinktem Stahl. Die Vierkantscheibe kann derart ausgelegt bzw. dimensioniert sein, dass diese eine Überlastsicherung zum Schutz des oberen Arretierungsbereichs an der Hubspindel für den Fall bildet, dass der Unterlenker mittels des Montagebolzens in der oberen Stellung festgelegt ist. Wird in diesem Zustand ein Anbaugerät in den Unterlenker eingehängt und mittels des hydraulischen Hubwerks angehoben, führt dies aufgrund der Überlastung der Vierkantscheibe dazu, dass diese unter Freigabe des Unterlenkers aus dem Arretierungsbereich herausgebogen wird. Der Unterlenker wird hierbei unter der Wirkung der Anbaugerätelast solange in Richtung seiner unteren Stellung verschwenkt, bis der Montagebolzen mit dem unteren Ende des Langlochs in Anlage kommt und der Unterlenker einen stabilen Zustand einnimmt. Der zerstörte Montagebolzen lässt sich vergleichsweise preiswert ersetzen.

Die Vierkantscheibe kann an dem Montagebolzen unter Bildung eines T-Bolzens fest angebracht sein. Die Vierkantscheibe ist dazu stirnseitig an einer von dem Montagebolzen umfassten Bolzenbasis angeschweißt oder bildet mit dieser ein einstückiges Schmiedeteil. Abweichend davon ist es auch vorstellbar, dass die Vierkantscheibe an dem Montagebolzen bzw. dessen Bolzenbasis von Hand lösbar angebracht ist und sich dort mittels eines Splints oder dergleichen sichern lässt. Im Hinblick auf den zuvor beschriebenen Überlastfall erlaubt dies einen Austausch lediglich der verbogenen Vierkantscheibe, ohne den gesamten Montagebolzen ersetzen zu müssen.

Zur optischen Zustandskontrolle sind die zumindest beiden Arretierungsbereiche unterschiedlich orientiert, wobei diese insbesondere in einem Winkel von etwa 45° zueinander verlaufen. Für den Fall einer Ausbildung des Formmerkmals als Vierkantscheibe ist es für einen Bediener aufgrund der sich daraus ergebenden charakteristischen Winkelstellung unmittelbar ersichtlich, ob der Unterlenker gerade in der lastfrei zu betreibenden oberen Stellung festgelegt ist oder nicht.

Aus Gründen der Robustheit ist es sinnvoll, wenn der zweite Befestigungsabschnitt zwei den Unterlenker umgreifende Gabelsegmente aufweist, wobei die zumindest beiden Arretierungsbereiche an jedem der beiden Gabelsegmente gleichermaßen vorgesehen sind. Der Montagebolzen weist in diesem Fall beiderseits entsprechende Formmerkmale auf. Sind die Formmerkmale als Vierkantscheiben ausgebildet, so können diese am Montagebolzen gegenüberliegend angeordnet sein, wobei die eine fest und die andere lösbar an der Bolzenbasis angebracht ist.

Bevorzugt weist das Langloch (von Mitte zu Mitte) eine Länge in der Größenordnung von 80 mm auf, um einen ausreichenden Seitenfreiraum für eine zwischen den in der oberen Stellung befindlichen Unterlenkern verlaufende Anhängedeichsel zu schaffen. Je nach den spezifischen Gegebenheiten kann jedoch auch ein davon abweichendes Maß gewählt werden.

Der erfindungsgemäße Dreipunkt-Kraftheber wird im Folgenden anhand der beigefügten Zeichnungen näher erläutert. Hierbei sind übereinstimmende oder bezüglich ihrer Funktion vergleichbare Komponenten mit denselben Bezugszeichen gekennzeichnet. Es zeigen:
- Fig. 1: ein ausschnittsweise dargestelltes Ausführungsbeispiel des erfindungsgemäßen Dreipunkt-Krafthebers für einen landwirtschaftlichen Traktor, und
- Fig. 2: eine perspektivische Detailansicht des in Fig. 1 wiedergegebenen Dreipunkt-Krafthebers.

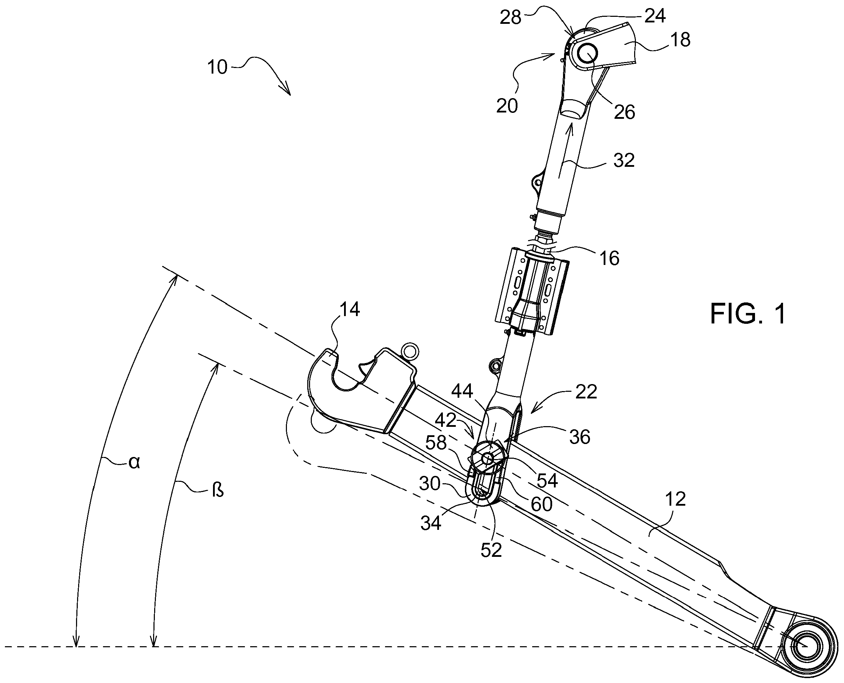

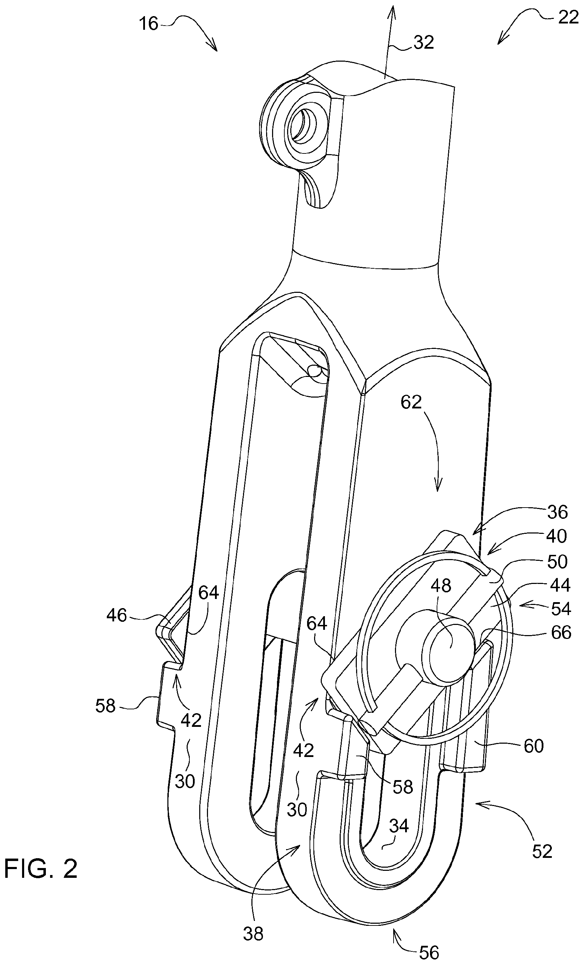

Fig. 1 zeigt in einer Ausschnittsdarstellung ein Ausführungsbeispiel des erfindungsgemäßen Dreipunkt-Krafthebers, wobei dieses nachfolgend unter Bezugnahme auf die Detailansicht in Fig. 2 erläutert werden soll. Aus Gründen der Übersichtlichkeit sind lediglich die erfindungswesentlichen Bestandteile des Dreipunkt-Krafthebers dargestellt. Dies gilt gleichermaßen für ein zwischen zugehörigen Unterlenkern befindliches Zugmaul oder eine vergleichbare Kupplungseinrichtung, an der sich eine Anhängedeichsel gezogener Zusatzgeräte, also beispielsweise eines Anhängers, Heuladewagens oder dergleichen anbringen lässt.

Der Dreipunkt-Kraftheber 10 umfasst linke und rechte Unterlenker, von denen in der gewählten Ansicht lediglich ein einzelner Unterlenker 12 mit einem Kupplungshaken 14 zur Aufnahme eines komplementären Befestigungselements eines an dem Dreipunkt-Kraftheber 10 anzubringenden Anbaugeräts zu sehen ist, wobei dieser mittels einer längenverstellbaren Hubspindel 16 mit einem zugehörigen Hubarm 18 in Verbindung steht, sodass eine an dem Hubarm 18 mittels eines hydraulischen Hubwerks ausgeführte Schwenkbewegung auf den Unterlenker 12 übertragbar ist.

Genauer gesagt weist die Hubspindel 16 einen an dem Hubarm 18 angelenkten ersten Befestigungsabschnitt 20 und einen an dem Unterlenker 12 angelenkten zweiten Befestigungsabschnitt 22 auf. Bei dem ersten Befestigungsabschnitt 20 handelt es sich um ein Befestigungsauge 24, das mittels eines Gelenkbolzens 26 in einem gabelförmigen Endbereich 28 des Hubarms 18 montiert ist, wohingegen der zweite Befestigungsabschnitt 22 zwei den Unterlenker 12 umgreifende Gabelsegmente 30 aufweist. In jedem der Gabelsegmente 30 ist ein in Längsrichtung 32 der Hubspindel 16 verlaufendes Langloch 34 ausgebildet, in dem ein sich durch eine Befestigungsöffnung des Unterlenkers 12 erstreckender Montagebolzen 36 gelagert ist (siehe hierzu insbesondere Fig. 2).

Entlang des jeweiligen Langlochs 34 sind zwei voneinander beabstandete Arretierungsbereiche 38, 40 zur formschlüssigen Aufnahme von an dem Montagebolzen 36 beiderseits vorgesehenen Formmerkmalen 42 ausgebildet. Bei jedem der Formmerkmale 42 handelt es sich um eine stirnseitig an dem Montagebolzen 36 angeordnete Vierkantscheibe 44, 46. Die eine Vierkantscheibe 44 ist an dem Montagebolzen 36 unter Bildung eines T-Bolzens fest angebracht, wozu diese stirnseitig an einer von dem Montagebolzen 36 umfassten Bolzenbasis 48 angeschweißt ist bzw. mit dieser ein einstückiges Schmiedeteil bildet. Die andere Vierkantscheibe 46 ist auf den Montagebolzen 36 bzw. dessen Bolzenbasis 48 von Hand lösbar aufgesteckt und dort mittels eines Splints 50 gesichert. Der Montagebolzen 36 einschließlich der beiden Vierkantscheiben 44, 46 besteht aus verzinktem Stahl.

Wie aus Fig. 2 ersichtlich ist, erlauben es die übereinander liegenden Arretierungsbereiche 38, 40, den Unterlenker 12 sowohl in einer unteren Stellung bzw. einer Betriebsstellung 52 wie auch einer oberen Stellung bzw. einer Transportstellung 54 mittels des Montagebolzens 36 festzulegen. Beispielsgemäß sind die beiden Arretierungsbereiche 38, 40 den gegenüberliegenden Enden des Langlochs 34 zugeordnet, sodass der Unterlenker 12 für den Fall, dass dieser mittels des Montagebolzens 36 in der Transportstellung 54 festgelegt ist, mittels des hydraulischen Hubwerks der Länge des Langlochs 34 weiter nach oben angehoben werden kann. Dies ist in Fig. 1 durch die beiden Maximalschwenkwinkel α und β, mit α > β veranschaulicht. Im vorliegenden Beispiel weist das Langloch 34 eine Länge (von Mitte zu Mitte) von etwa 80 mm auf.

Zusätzlich sind die Vierkantscheiben 44, 46 durch Umstecken des Montagebolzens 36 in eine den Unterlenker 12 freigebende Schwimmstellung 56 verbringbar. Hierzu wird zunächst der Splint 50 gelöst, die lose Vierkantschiebe 46 abgenommen sowie der Montagebolze 36 aus dem Langloch 34 herausgezogen. Anschließend wird der Montagebolzen 36 in der Schwimmstellung 56 in umgekehrter Reihenfolge wieder angebracht. Die Schwimmstellung 56 erlaubt es, dass ein an dem Dreipunkt-Kraftheber 10 angebrachtes bodeneingreifendes Anbaugerät, beispielsweise eine Egge, ein Grubber oder dergleichen, innerhalb der durch das Langloch 34 gesetzten Grenzen einer zu bearbeitenden Bodenkontur folgen kann.

Beispielsgemäß verlaufen entlang des Langlochs 34 linke und rechte Wangen 58, 60, wobei die Vierkantscheiben 44, 46 im Falle des in der Schwimmstellung 56 befindlichen Montagebolzens 36 jeweils zwischen den beiden Wangen 58, 60 geführt sind. Die Vierkantscheiben 44, 46 können sich dann frei entlang des durch die beiden Wangen 58, 60 umgrenzten Führungsbereichs 62 hin und her bewegen.

Die Arretierungsbereiche 38, 40 sind in den beiden Wangen 58, 60 in Gestalt von mit einer Außenkontur der Vierkantscheiben 44, 46 komplementären Ausbrüchen 64, 66 ausgeformt. Die in die Ausbrüche 64, 66 der Wangen 58, 60 hineinragenden Außenkonturen der Vierkantscheiben 44, 46 blockieren dabei eine Bewegung des Montagebolzens 36 und damit des Unterlenkers 12 entlang des Langlochs 34 in der Betriebs- bzw. Transportstellung 52, 54 .

Zur optischen Zustandskontrolle sind die beiden Arretierungsbereiche 38, 40 unterschiedlich orientiert. Gemäß Fig. 2 verlaufen diese in einem Winkel von etwa 45° zueinander.

Die Vierkantscheiben 44, 46 sind derart ausgelegt bzw. dimensioniert, dass diese eine Überlastsicherung zum Schutz des oberen Arretierungsbereichs 40 an der Hubspindel 16 für den Fall bilden, dass der Unterlenker 12 mittels des Montagebolzens 36 in der Transportstellung 54 festgelegt ist. Wird in diesem Zustand ein Anbaugerät in den Unterlenker 12 eingehängt und mittels des hydraulischen Hubwerks angehoben, führt dies aufgrund der Überlastung der Vierkantscheiben 44, 46 dazu, dass diese unter Freigabe des Unterlenkers 12 aus dem jeweiligen Arretierungsbereich 38, 40 herausgebogen werden. Der Unterlenker 12 wird hierbei unter der Wirkung der Anbaugerätelast solange in Richtung der Betriebsstellung 52 verschwenkt, bis der Montagebolzen 36 mit dem unteren Ende des Langlochs 34 in Anlage kommt und der Unterlenker 12 einen stabilen Zustand einnimmt.

## Patentansprüche

1. Dreipunkt-Kraftheber für einen landwirtschaftlichen Traktor, mit einem Hubarm (18), einem Unterlenker (12) und einer dazwischen angeordneten Hubspindel (16) zur Übertragung einer an dem Hubarm (18) ausgeführten Schwenkbewegung auf den Unterlenker (12), wobei die Hubspindel (16) einen an dem Hubarm (18) angelenkten ersten Befestigungsabschnitt (20) und einen an dem Unterlenker (12) angelenkten zweiten Befestigungsabschnitt (22) aufweist, wobei in dem zweiten Befestigungsabschnitt (22) ein in Längsrichtung (32) der Hubspindel (16) verlaufendes Langloch (34) ausgebildet ist, in dem ein sich durch eine Befestigungsöffnung des Unterlenkers (12) erstreckender Montagebolzen (36) gelagert ist, wobei entlang des Langlochs (34) zumindest zwei voneinander beabstandete Arretierungsbereiche (38, 40) zur formschlüssigen Aufnahme eines an dem Montagebolzen (36) vorgesehenen Formmerkmals (42) ausgebildet sind, wobei eine Bewegung des Unterlenkers (12) entlang des Langlochs (34) jeweils für den Fall blockiert ist, dass der Montagebolzen (36) mittels des Formmerkmals (42) von einem der Arretierungsbereiche (38, 40) aufgenommen ist, **dadurch gekennzeichnet, dass** die zumindest beiden Arretierungsbereiche (38, 40) entlang des Langlochs (34) unterschiedlich zueinander verlaufend orientiert sind.

2. Dreipunkt-Kraftheber nach Anspruch 1, **dadurch gekennzeichnet, dass** das Formmerkmal (42) durch Umstecken des Montagebolzens (36) in eine die Unterlenker (12) entlang des Langlochs (34) freigebende Schwimmstellung (56) verbringbar ist.

3. Dreipunkt-Kraftheber nach Anspruch 2, **dadurch gekennzeichnet, dass** entlang des Langlochs (34) linke und rechte Wangen (58, 60) verlaufen, wobei das Formmerkmal (42) in der Schwimmstellung (56) zwischen den beiden Wangen (58, 60) geführt ist.

4. Dreipunkt-Kraftheber nach Anspruch 3, **dadurch gekennzeichnet, dass** die Arretierungsbereiche (38, 40) in den beiden Wangen (58, 60) in Gestalt von mit einer Außenkontur des Formmerkmals (42) komplementären Ausbrüchen (64, 66) ausgeformt sind.

5. Dreipunkt-Kraftheber nach wenigstens einem der Ansprüche 1 bis 4, **dadurch gekennzeichnet, dass** es sich bei dem Formmerkmal (42) um eine stirnseitig an dem Montagebolzen (36) angeordnete Vierkantscheibe (44, 46) handelt.

6. Dreipunkt-Kraftheber nach Anspruch 5, **dadurch gekennzeichnet, dass** die Vierkantscheibe (44, 46) an dem Montagebolzen (36) fest oder von Hand lösbar angebracht ist.

7. Dreipunkt-Kraftheber nach wenigstens einem der Ansprüche 1 bis 6, **dadurch gekennzeichnet, dass** der zweite Befestigungsabschnitt (22) zwei den Unterlenker (12) umgreifende Gabelsegmente (30) aufweist, wobei die zumindest beiden Arretierungsbereiche (38, 40) an jedem der beiden Gabelsegmente (30) gleichermaßen vorgesehen sind.

8. Dreipunkt-Kraftheber nach wenigstens einem der Ansprüche 1 bis 7, **dadurch gekennzeichnet, dass** das Langloch (34) eine Länge in der Größenordnung von 80 mm aufweist.

9. Landwirtschaftlicher Traktor mit einem Dreipunkt-Kraftheber (10) zur Anbringung eines Anbaugeräts nach wenigstens einem der Ansprüche 1 bis 8.

## Claims

1. Three point power lift for an agricultural tractor, with a lifting arm (18), a lower link (12) and a lifting spindle (16), which is arranged in between, for transmitting a pivoting movement exerted on the lifting arm (18) to the lower link (12), wherein the lifting spindle (16) has a first fastening portion (20) coupled to the lifting arm (18) and a second fastening portion (22) coupled to the lower link (12), wherein the second fastening portion (22) has an elongated hole (34) which runs in the longitudinal direction (32) of the lifting spindle (16) and in which a mounting pin (36) extending through a fastening opening in the lower link (12) is mounted, wherein at least two spaced-apart locking regions (38, 40) for the form-fitting receiving of a shaped feature (42) provided on the mounting pin (36) are formed along the elongated hole (34), wherein a movement of the lower link (12) along the elongated hole (34) is in each case blocked for the situation in which the mounting pin (36) by means of the shaped feature (42) is received by one of the locking regions (38, 40), **characterized in that** the at least two locking regions (38, 40) are oriented running differently from one another along the elongated hole (34).

2. Three point power lift according to Claim 1, **characterized in that** the shaped feature (42) can be brought by replugging of the mounting pin (36) into a floating position (56) releasing the lower link (12) along the elongated hole (34).

3. Three point power lift according to Claim 2, **characterized in that** left and right cheeks (58, 60) run along the elongated hole (34), wherein the shaped feature (42) is guided between the two cheeks (58, 60) in the floating position (56).

4. Three point power lift according to Claim 3, **characterized in that** the locking regions (38, 40) in the two cheeks (58, 60) are shaped in the form of cutouts (64, 66) which are complementary to an outer contour of the shaped feature (42).

5. Three point power lift according to at least one of Claims 1 to 4, **characterized in that** the shaped feature (42) is a rectangular plate (44, 46) arranged on the end side of the mounting pin (36).

6. Three point power lift according to Claim 5, **characterized in that** the rectangular plate (44, 46) is attached to the mounting plate (36) fixedly or so as to be releasable manually.

7. Three point power lift according to at least one of Claims 1 to 6, **characterized in that** the second fastening portion (22) has two fork segments (30) engaging around the lower link (12), wherein the at least two locking regions (38, 40) are provided uniformly on each of the two fork segments (30).

8. Three point power lift according to at least one of Claims 1 to 7, **characterized in that** the elongated hole (34) has a length of the order of magnitude of 80 mm.

9. Agricultural tractor with a three-point power lift (10) for attaching a mounted implement according to at least one of Claims 1 to 8.

## Revendications

1. Vérin à trois points destiné à un tracteur agricole, ledit vérin comprenant un bras de levage (18), une biellette inférieure (12) et une broche de levage (16) disposée entre eux et destinée à transmettre un mouvement de pivotement, effectué au niveau du bras de levage (18), à la biellette inférieure (12), la broche de levage (16) comportant une première portion de fixation (20), reliée de manière articulée au bras de levage (18), et une deuxième portion de fixation (22) reliée de manière articulée à la biellette inférieure (12), un trou oblong (34), qui s'étend dans la direction longitudinale (32) de la broche de levage (16) et dans lequel est logé un boulon de montage (36) qui s'étend à travers une ouverture de fixation de la biellette inférieure (12), étant ménagé dans la deuxième portion de fixation (22), au moins deux zones de blocage (38, 40), espacées l'une de l'autre, étant formées le long du trou oblong (34) et étant destinées à recevoir par complémentarité de formes un élément profilé (42) prévu au niveau du boulon de montage (36), un mouvement de la biellette inférieure (12) le long du trou oblong (34) étant bloqué à chaque fois que le boulon de montage (36) est reçu par l'une des zones de blocage (38, 40) au moyen de l'élément profilé (42), **caractérisé en ce que** les au moins deux zones de blocage (38, 40) sont orientées le long du trou oblong (34) en s'étendant différemment l'une de l'autre.

2. Vérin à trois points selon la revendication 1, **caractérisé en ce que** l'élément profilé (42) peut être amené, par repositionnement du boulon de fixation (36), dans une position flottante (56) libérant la biellette inférieure (12) le long du trou oblong (34).

3. Vérin à trois points selon la revendication 2, **caractérisé en ce que** des joues gauche et droite (58, 60) s'étendent le long du trou oblong (34), l'élément profilé (42) étant guidé dans la position flottante (56) entre les deux joues (58, 60).

4. Vérin à trois points selon la revendication 3, **caractérisé en ce que** les zones de blocage (38, 40) dans les deux joues (58, 60) sont conçues sous la forme de creux (64, 66) complémentaires d'un contour extérieur de l'élément profilé (42).

5. Vérin à trois points selon l'une au moins des revendications 1 à 4, **caractérisé en ce que** l'élément profilé (42) est une rondelle carrée (44, 46) disposée du côté frontal au niveau du boulon de montage (36).

6. Vérin à trois points selon la revendication 5, **caractérisé en ce que** la rondelle carrée (44, 46) est montée sur le boulon de montage (36) de manière fixe ou amovible à la main.

7. Vérin à trois points selon l'une au moins des revendications 1 à 6, **caractérisé en ce que** la deuxième portion de fixation (22) comporte deux segments de fourche (30) s'engageant autour de la biellette inférieure (12), les au moins deux zones de blocage (38, 40) étant prévues de la même manière au niveau de chacun des deux segments de fourche (30).

8. Levier à trois points selon l'une au moins des revendications 1 à 7, **caractérisé en ce que** le trou oblong (34) a une longueur de l'ordre de 80 mm.

9. Tracteur agricole pourvu d'un levier à trois points (10) selon l'une au moins des revendications 1 à 8 qui est destiné au montage d'un accessoire.
